# EUROPEAN PATENT APPLICATION

(11) **EP 1 736 305 A1**
(43) Date of publication of application: **27.12.2006**
(21) Application number: 05730479.2
(22) Date of filing: 13.04.2005
(51) Int. Cl.: B32B 1/08, B32B 27/30, F16L 11/04

(54) **MULTILAYER TUBE**

(30) Priority: 16.04.2004 JP 2004122101
(71) Applicant: Asahi Glass Company, Limited, Chiyoda-ku, Tokyo 100-8405 (JP)
(72) Inventor: FUNAKI, Atsushi, c/o Asahi Glass Company, Limited, Ichihara-shi Chiba, 2908566 (JP); IWASA, Tsuyoshi, c/o Asahi Glass Company, Limited, Ichihara-shi Chiba, 2908566 (JP)
(74) Representative: Müller-Boré & Partner Patentanwälte
(86) International application number: PCT/JP2005/007181
(87) International publication number: WO 2005/100008

(57) **Abstract**

A laminate tube which comprises a layer made of a fluorocopolymer containing repeating units based on at least one fluoromonomer selected from the group consisting of tetrafluoroethylene and chlorotrifluoroethylene and repeating units based on at least one functional monomer selected from the group consisting of an acid anhydride having a polymerizable unsaturated bond and a dicarboxylic acid having a polymerizable unsaturated bond, and a layer made of a non-fluororesin directly laminated, and has a haze of from 0.1 to 30%. The laminate tube is excellent in transparency, excellent in interlaminar adhesion and anti-elution properties, excellent in liquid and gas barrier properties and applicable to transportation of a liquid such as a beverage and a coating composition.

## Description

### TECHNICAL FIELD

The present invention relates to a fluorocopolymer laminate tube.

### BACKGROUND ART

For tubes to be used for transportation of drinking water, various beverages, pure water, ultrapure water, coating compositions, pharmaceutical preparations, alcohols and other chemical solutions, various properties such as chemical resistance, antifouling properties, abrasion resistance, anti-elution properties, gas barrier properties, toughness, water resistance, age resistance and flexibility are required. For example, for a tube for a beer dispenser, properties such as chemical resistance, antifouling properties, abrasion resistance, anti-elution properties, gas barrier properties, toughness, water resistance, age resistance and flexibility are required.

Heretofore, as a tube for a beer dispenser, a tube made of non-rigid vinyl chloride (PVC) excellent in transparency has been used, but it has had insufficient abrasion resistance and further, it has had problems such as elution of a plasticizer and stains on the tube due to deposition of a colorant from the beer during long term use. For improvement in this viewpoint, a double-layer laminate tube comprising an inner layer and an outer layer has been proposed.

For example, a double-layer laminate tube or the like has been proposed, employing for the inner layer polypropylene (PP) in which a colorant, fine particles and the like are less likely to be adsorbed, and for the outer layer an olefin thermoplastic elastomer excellent in heat resistance, transparency and flexibility, and a double-layer laminate tube employing for the inner layer an adhesive polyolefin resin and for the outer layer an ethylene/vinyl acetate copolymer (EVA) have been proposed. These double-layer laminate tubes comply with the Food Sanitation Law, but the inner layer thereof has insufficient colorant deposition resistance and antifouling properties, and stains have to be necessarily cleaned off after use for a certain period.

A fluororesin tube is excellent in chemical resistance, antifouling properties, anti-elution properties, gas barrier properties, toughness, water resistance, age resistance and colorant deposition resistance, but is expensive as compared with a PVC tube. It is preferred to reduce the amount of a fluororesin used by laminating a fluororesin and a non-fluororesin. Further, it is preferred to laminate a non-fluororesin for improvement of the abrasion resistance, etc. However, a fluororesin is essentially nonadhesive, and thus no sufficient interlaminar adhesion between a fluororesin layer and a non-fluororesin will be achieved only by laminating them.

For improvement of the interlaminar adhesion, a multi-layer laminate tube comprising a fluororesin tube subjected to surface treatment by chemical etching or corona discharge, which is covered with an outer layer, has been proposed. Although the interlaminar adhesion will be improved by such a process, as the number of production steps increases, the product tends to be expensive. Further, a process of etching a fluororesin tube with sodium to improve the interlaminar adhesion, by which the tube will be colored, can not be applicable to use for which transparence is required.

JP-A-8-142151 discloses a double-layer laminate tube formed by coextrusion of polyvinylidene fluoride (hereinafter referred to as PVDF) for the inner layer and a polyurethane resin or a polyurethane elastomer for the outer layer, having improved interlaminar adhesion. The double-layer laminate tube will be whitened when bent, since PVDF has high hardness. Particularly in a low temperature region, PVDF tends to be fragile, and the laminate tube can not be applicable to transportation of a cold liquid.

JP-A-2001-193872 discloses a double-layer laminate tube formed by coextrusion of PVDF and an acrylic elastomer or a styrene elastomer. This laminate tube also has the above problems because of PVDF.

JP-A-10-286897 discloses a double-layer laminate tube employing for the inner layer a copolymer of vinylidene fluoride with hexafluoropropylene (hereinafter referred to as HFP) and for the outer layer a polyurethane resin or a polyurethane elastomer, but its interlaminar adhesion is not sufficient. The polyurethane resin or the polyurethane elastomer is hydrolysable, and thus the laminate tube is not applicable to use for e.g. a piping hose for beverages.

JP-A-2003-191402 discloses a double-layer laminate tube employing for the inner layer an ethylene/tetrafluoroethylene copolymer (hereinafter referred to as ETFE) having an organic peroxide blended therewith and subjected to heat treatment, and for the outer layer a polyamide or an ethylene/vinyl alcohol copolymer (hereinafter referred to as EVOH). With respect to this double-layer laminate tube, if the organic peroxide incorporated in ETFE for the inner layer remains in the tube, the organic peroxide may be eluted during transportation.

### DISCLOSURE OF THE INVENTION

### OBJECT TO BE ACCOMPLISHED BY THE INVENTION

It is an object of the present invention to provide a laminate tube excellent in transparency, excellent in interlaminar adhesion and anti-elution properties, and excellent in liquid and gas barrier properties.

### MEANS TO ACCOMPLISH THE OBJECT

The present invention provides a laminate tube which comprises a layer made of a fluorocopolymer containing repeating units based on at least one fluoromonomer selected from the group consisting of tetrafluoroethylene and chlorotrifluoroethylene and repeating units based on at least one functional monomer selected from the group consisting of an acid anhydride having a polymerizable unsaturated bond and a dicarboxylic acid having a polymerizable unsaturated bond, and a layer made of a non-fluororesin directly laminated, and has a haze of from 0.1 to 30%.

### EFFECTS OF THE INVENTION

The laminate tube of the present invention is excellent in the interlaminar adhesion between the fluororesin layer and the non-fluororesin layer and in transparency. It has excellent properties of a fluororesin such as chemical resistance, solvent resistance, oil resistance, gas barrier properties, water resistance, water repellency, oil repellency, weather resistance, corrosion resistance, waterproof properties and antifouling properties, is available at a low cost and is applicable to a wide range of fields. Further, it is also excellent in mechanical properties such as abrasion resistance because of the non-fluororesin layer.

### BEST MODE FOR CARRYING OUT THE INVENTION

The fluorocopolymer in the present invention is a fluorocopolymer containing repeating units based on at least one fluoromonomer selected from the group consisting of tetrafluoroethylene (hereinafter referred to as TFE) and chlorotrifluoroethylene (hereinafter referred to as CTFE) and repeating units based on at least one functional monomer (hereinafter referred to as AM) selected from the group consisting of an acid anhydride having a polymerizable unsaturated bond and a dicarboxylic acid having a polymerizable unsaturated bond.

The fluoromonomer is preferably TFE. Further, specific examples of AM include maleic anhydride, maleic acid, itaconic anhydride, itaconic acid, citraconic anhydride and citraconic acid. AM is preferably at least one functional monomer selected from the group consisting of itaconic anhydride, itaconic acid, citraconic anhydride and citraconic acid, more preferably itaconic anhydride or citraconic anhydride, most preferably itaconic anhydride.

Specific examples include an ethylene-TFE-AM copolymer, a TFE-HFP-AM copolymer, a TFE-perfluoro(alkyl vinyl ether)-AM copolymer, a TFE-vinylidene fluoride-AM copolymer, a TFE-HFP-vinylidene fluoride-AM copolymer, a CTFE-AM copolymer and an ethylene-CTFE-AM copolymer. Preferred is an ethylene-TFE-AM copolymer, an ethylene-CTFE-AM copolymer, a TFE-HFP-AM copolymer, a TFE-perfluoro(alkyl vinyl ether)-AM copolymer or a TFE-HFP-vinylidene fluoride-AM copolymer, and more preferred is an ethylene-TFE-AM copolymer.

The fluorocopolymer preferably contains repeating units (a) based on at least one fluoromonomer selected from the group consisting of TFE and CTFE, repeating units (b) based on ethylene (hereinafter referred to as E) and repeating units (c) based on at least one functional monomer selected from the group consisting of itaconic anhydride, itaconic acid, citraconic anhydride and citraconic acid, with a molar ratio (a)/(b) of from 20/80 to 80/20 and a molar ratio (c)/((a)+(b)) of from 1/10000 to 5/100.

The molar ratio (a)/(b) is more preferably from 50/50 to 70/30. If the molar ratio (a)/(b) is too low, heat resistance, weather resistance, chemical resistance, gas barrier properties, liquid barrier properties, etc. of the fluorocopolymer tend to be low, and if the molar ratio is too high, mechanical strength, melt processability, etc. tend to be low. Within this range, the fluorocopolymer will be excellent in heat resistance, weather resistance, chemical resistance, gas barrier properties, liquid barrier properties, mechanical strength, melt processability, etc.

The molar ratio (c)/((a)+(b)) is more preferably from 1/1000 to 5/100, furthermore preferably from 3/2000 to 3/100, most preferably from 3/1000 to 3/100. If the molar ratio is too low, the interlaminar adhesion with the non-fluororesin will be insufficient, and if it is too high, the liquid barrier properties will be insufficient. Within this range, the fluorocopolymer will be excellent in the interlaminar adhesion and the liquid barrier properties.

The fluorocopolymer of the present invention more preferably contains, in addition to the above repeating units (a), (b) and (c), repeating units (d) based on another fluoromonomer (excluding TFE and CTFE).

Another fluoromonomer may, for example, be a fluoroolefin having a hydrogen atom in an unsaturated group such as a compound represented by CH₂=CX(CF₂)ₙY (wherein each of X and Y which are independent of each other, is hydrogen or a fluorine atom, and n is an integer of from 2 to 8), vinylidene fluoride (VDF), vinyl fluoride, a fluoroolefin (excluding TFE and CTFE) having no hydrogen atom in an unsaturated group such as HFP, a perfluoro(alkyl vinyl ether) such as perfluoro(methyl vinyl ether), perfluoro(propyl vinyl ether) (PPVE) or perfluoro(butyl vinyl ether), or a fluorinated alkyl vinyl ether having a hydrogen atom such as 2,2,2-trifluoroethyl trifluorovinyl ether. The fluoromonomer may be used alone or in combination of two or more of them.

Another fluoromonomer is preferably at least one member selected from the group consisting of a compound represented by CH₂=CX(CF₂)ₙY, VDF, HFP and PPVE, more preferably a compound represented by CH₂=CX(CF₂)ₙY.

The compound represented by CH₂=CX(CF₂)ₙY is more preferably one wherein n=2 to 4, whereby the fluorocopolymer will be excellent in liquid barrier properties and crack resistance. Most preferred is a compound represented by CH₂=CH(CF₂)ₙF. Specific examples of the compound include CH₂=CF(CF₂)₂F, CH₂=CF(CF₂)₃F, CH₂=CF(CF₂)₄F, CH₂=CF(CF₂)₂H, CH₂=CF(CF₂)₃H, CH₂=CF(CF₂)₄H, CH₂=CH(CF₂)₂F, CH₂=CH(CF₂)₃F, CH₂=CH(CF₂)₄F, CH₂=CH(CF₂)₂H, CH₂=CH(CF₂)₃H and CH₂=CH(CF₂)₄H. More preferred is CH₂=CF(CF₂)₂F, CH₂=CH(CF₂)₂F, CH₂=CH(CF₂)₂H or CH₂=CF(CF₂)₂H, most preferred is CH₂=CH(CF₂)₂F.

In a case where the fluorocopolymer contains repeating units (d) based on another fluoromonomer, the content is preferably from 0.1 to 20 mol%, more preferably from 0.5 to 15 mol%, most preferably from 0.5 to 10 mol%, based on all the repeating units in the fluorocopolymer. Within this range, the fluorocopolymer will be excellent in crack resistance.

In the present invention, the volumetric flow rate of the fluorocopolymer is preferably from 0.1 to 1,000 mm³/sec, more preferably from 1 to 100 mm³/sec. The volumetric flow rate is the scale of the molecular weight, and a larger value represents a lower molecular weight. When the volumetric flow rate is within this range, the fluorocopolymer will be excellent in processability. In the present invention, the volumetric flow rate is the extrusion rate of the fluorocopolymer when extruded from an orifice with a diameter of 2.1 mm and the length of 8 mm under a load of 7 kg at a temperature higher than the melting point of the fluorocopolymer by 50°C by using a Flowtester manufactured by Shimadzu Corporation. Particularly when the volumetric flow rate of the above E-TFE-AM copolymer is within this range, the copolymer will be excellent in processability.

The process for producing the fluorocopolymer of the present invention is not particularly limited, and a polymerization method employing a radical polymerization initiator may be employed. A polymerization method may be bulk polymerization, solution polymerization using an organic solvent such as fluorohydrocarbon, chlorohydrocarbon, chlorofluorohydrocarbon, alcohol or hydrocarbon, suspension polymerization using an aqueous medium and as the case requires, an appropriate organic solvent, or emulsion polymerization using an aqueous medium and an emulsifier, and particularly preferred is solution polymerization.

The radical polymerization initiator is preferably a radical polymerization initiator of which the temperature at which its half-life is 10 hours is preferably from 0°C to 100°C, more preferably from 20 to 90°C. Specific examples include an azo compound such as azobisisobutyronitrile, a non-fluorinated diacyl peroxide such as isobutyryl peroxide, octanoyl peroxide, benzoyl peroxide or lauroyl peroxide, a peroxydicarbonate such as diisopropylperoxydicarbonate, a peroxyester such as tert-butyl peroxypivarate, tert-butyl peroxyisobutyrate or tert-butyl peroxyacetate, a fluorinated diacyl peroxide such as a compound represented by (Z(CF₂)ₚCOO)₂ (wherein Z is a hydrogen atom, a fluorine atom or a chlorine atom, and p is an integer of from 1 to 10), and an inorganic peroxide such as potassium persulfate, sodium persulfate or ammonium persulfate.

In the present invention, it is preferred to use a chain transfer agent so as to control the volumetric flow rate of the fluorocopolymer. The chain transfer agent may be an alcohol such as methanol or ethanol, a chlorofluorohydrocarbon such as 1,3-dichloro-1,1,2,2,3-pentafluoropropane or 1,1-dichloro-1-fluoroethane, or a hydrocarbon such as pentane, hexane or cyclohexane.

The chain transfer agent preferably has a functional group such as an ester bond, a carbonate bond, a hydroxyl group, a carboxy group or a carbonyl fluoride group, whereby a terminal group having an interaction with the non-fluororesin is introduced to the fluorocopolymer. The chain transfer agent having a functional group may, for example, be acetic acid, acetic anhydride, methyl acetate, ethylene glycol or propylene glycol.

In the present invention, the polymerization conditions are not particularly limited, and the polymerization temperature is preferably from 0 to 100°C, more preferably from 20 to 90°C. The polymerization pressure is preferably from 0.1 to 10 MPa, more preferably from 0.5 to 3 MPa. The polymerization time is preferably from 1 to 30 hours.

The concentration of AM during polymerization is preferably from 0.01 to 5 mol% based on all the monomers, more preferably from 1 to 3 mol%, most preferably from 0.1 to 1 mol%. If the concentration of AM is too high, the polymerization rate tends to decrease. Within the above range, the polymerization rate during production will not decrease, and further, the fluorocopolymer will be excellent in the interlaminar adhesion. During the polymerization, as AM is consumed by the polymerization, it is preferred to continuously or intermittently supply the consumed amount to a polymerization vessel thereby to maintain the concentration of AM within this range.

The fluorocopolymer is preferably pelletized before subjected to melt coextrusion. For pelletizing, it is preferred to use a single screw or twin screw extruder for the melt extrusion. The cylinder temperature of the extruder is preferably from 100 to 350°C, and the crosshead temperature and the die temperature are respectively preferably from 200 to 350°C, and the number of revolutions of the screw is not particularly limited but is preferably from 10 to 200 revolutions/min. The retention time of the fluorocopolymer in the extruder is preferably from 1 to 10 minutes. The diameter of the discharge outlet of the die is preferably from 2 to 20 mm. The fluorocopolymer in the form of strand molten and discharged from the discharge outlet is cooled and solidified with water or air while being expanded, and cut by a cutter to obtain cylindrical pellets having a length of from 1 to 5 mm and a diameter of from 1 to 5 mm.

In the present invention, the non-fluororesin may, for example, be a thermoplastic resin such as polyethylene (PE), polypropylene (PP), polystyrene, polyvinyl chloride, polyvinyl alcohol, an ethylene-vinyl acetate copolymer (EVA), an ethylene-vinyl alcohol copolymer (EVOH), an acrylic resin, a polyester such as polyethylene terephthalate, polyacetal, polycarbonate (PC), polyurethane (PU) or polyimide, or a thermoplastic elastomer such as a styrene thermoplastic elastomer, an olefin thermoplastic elastomer, a polyurethane thermoplastic elastomer (TPU), a polyester thermoplastic elastomer (TPEE) or a fluorinated thermoplastic elastomer. Preferred is EVA, EVOH, PE, PP, PC, PU, TPU or TPEE, more preferred is EVA, EVOH, PU, TPU or TPEE. Most preferred is a thermoplastic elastomer, and particularly preferred is TPU or TPEE. The obtained laminate tube will be excellent in transparency, flexibility and durability.

The laminate tube of the present invention comprises a layer made of the fluorocopolymer and a layer made of the non-fluororesin directly laminated. The laminate tube may be preferably not only a double-layer laminate tube comprising a layer made of the fluorocopolymer and a layer made of the non-fluororesin but also a multilayer laminate tube such as a three-layer laminate tube or a four-layer laminate tube further having at least one layer made of another fluororesin or a non-fluororesin laminated. It is essential in the multilayer laminate tube also that a layer made of the fluorocopolymer and a layer made of the non-fluororesin are directly laminated. The innermost layer in the laminate tube of the present invention is preferably made of the fluorocopolymer or another fluororesin. When the innermost layer is made of the fluorocopolymer or another fluororesin, most excellent liquid and gas barrier properties and solvent resistance will be achieved. The innermost layer is most preferably made of the fluorocopolymer.

The thickness of the layer made of the fluorocopolymer is preferably from 1 µm to 1 mm, more preferably from 1 µm to 0.5 mm, most preferably from 1 µm to 0.2 mm. Further, the thickness of the layer made of the non-fluororesin is preferably from 1 µm to 5 mm, more preferably from 1 µm to 2 mm, most preferably from 1 µm to 1 mm. When the thicknesses of the respective layers are within the above range, excellent interlaminar adhesion and excellent transparency will be achieved.

The laminate tube of the present invention is preferably made by coextrusion of the fluororesin and the non-fluororesin. Molten products discharged from two or more extruders pass through dies in a molten state while they are contacted and molded into a laminate tube. As the extrusion temperature, the screw temperature is preferably from 100 to 350°C, and the crosshead temperature and the die temperature are respectively preferably from 200 to 350°C. The number of revolutions of the screw is not particularly limited but is preferably from 10 to 200 revolutions/min. The retention time of the fluorocopolymer in the extruder is preferably from 1 to 10 minutes.

With respect to the laminate tube of the present invention, the interlaminar adhesive strength between the layer made of the fluorocopolymer and the layer made of the non-fluororesin is preferably from 5 to 60 N/cm. It is more preferably from 15 to 60 N/cm, most preferably from 30 to 60 N/cm. When the interlaminar adhesive strength is within this range, layers will not be separated from each other, and the transparency will not decrease when the laminate tube is bent.

The laminate tube of the present invention has a haze of from 0.1 to 30%. When the haze is within this range, the laminate tube will be excellent in transparency and excellent in visibility of a liquid transported. The haze of the laminate tube is more preferably from 0.1 to 25%, most preferably from 0.1 to 20%. The haze is measured with respect to a laminate tube having a thickness of 1 mm in accordance with JIS K7136.

### EXAMPLES

Now, the present invention will be described in further detail with reference to Examples and Comparative Examples. However, the present invention is by no means restricted thereto. The interlaminar adhesive strength and the haze were measured by the following methods.

### [Interlaminar adhesive strength (unit: N/cm)]

A laminate tube was cut into a piece with a length of 20 cm, which was further cut lengthwise to prepare a sample. The layer made of the fluorocopolymer and the layer made of the non-fluororesin of the laminate tube were separated at least 3 cm from the end, and using a tensilon, the respective layers were pinched by upper and lower chucks so that the non-separated portion would not be in contact with the tensilon, and the layers were separated 180° at a rate of 30 mm/min. Measurement was carried out with respect to two samples, and the average peel strength (N/cm) was taken as the interlaminar adhesive strength.

### [Haze (unit: %)]

Measured by means of SM color computer (manufactured by Suga) in accordance with JIS K7136. As a sample, a laminate having a thickness of 1 mm obtained by cutting the laminate tube into a piece with a length of 20 cm and then cutting it lengthwise was used. Further, as a reference, the haze of the fluorocopolymer was measured. As a sample of the fluorocopolymer, a film of a fluorocopolymer having a thickness of 0.2 mm, obtained by compression molding at a temperature of 280°C for 5 minutes was used.

### PREPARATION EXAMPLE 1

A fluorocopolymer was produced by solution polymerization method. A polymerization vessel having an internal volume of 94 liter equipped with a stirrer was deaerated, and 92.1 kg of 1-hydrotridecafluorohexane, 16.3 kg of 1,3-dichloro-1,1,2,2,3-pentafluoropropane (AK225cb, manufactured by Asahi Glass Company, Limited, hereinafter referred to as AK225cb), 73 g of (perfluoroethyl) ethylene CH₂=CH(CF₂)₂F (hereinafter referred to as PFEE) and 10.1 g of itaconic anhydride (hereinafter referred to as IAN) were charged. Then, 9.6 kg of TFE and 0.7 kg of E were injected, the temperature in the polymerization vessel was increased to 66°C, and 433 mL of a 1% AK225cb solution of tert-butyl peroxypivarate as a polymerization initiator was charged to initiate the polymerization. A monomer gas mixture of TFE/E of 60/40 (molar ratio) was continuously charged so that the pressure would be constant during polymerization. Further, PFEE in an amount corresponding to 2.0 mol% based on the total number of mols of TFE and E to be charged during the polymerization and IAN in an amount corresponding to 0.5 mol% were continuously charged. 5.5 Hours after initiation of the polymerization, upon charging of 8.0 kg of the monomer gas mixture and 63 g of IAN, the temperature in the interior of the polymerization vessel was decreased to room temperature, and unreacted monomers were purged to normal pressure.

The obtained fluorocopolymer (C-1) in the form of a slurry was put in a 200 L granulation vessel into which 75 kg of water was charged, and the temperature was increased to 105°C with stirring for granulation while the solvent was distilled off. The obtained granules were dried at 150°C for 5 hours to obtain 8.3 kg of granules of the fluorocopolymer (C-1).

As a result of melt NMR, IR and fluorine content analysis, the copolymer composition of the fluorocopolymer (C-1) was such that repeating units based on TFE/repeating units based on E/repeating units based on PFEE/repeating units based on IAN=58.5/39/2/0.5 (molar ratio). The fluorocopolymer (C-1) had a melting point of 240°C and a volumetric flow rate of 15 mm³/sec. A film having a thickness of 0.2 mm obtained from the fluorocopolymer (C-1) had a haze of 4.3%. The granules were melt-kneaded by using an extruder at 260°C for a retention time of 2 minutes to prepare pellets (C-1).

### PREPARATION EXAMPLE 2

In the same manner as in Preparation Example 1 except that 10.1 g of citraconic anhydride (hereinafter referred to as CAN) was used instead of IAN as the charged monomer and that 63 g of CAN for post-charge was used, solution polymerization was carried out to produce granules of a fluorocopolymer (C-2), the copolymer composition of which was such that repeating units based on TFE/repeating units based on E/repeating units based on PFEE/repeating units based on CAN=58.5/39/2/0.5 (molar ratio). The fluorocopolymer (C-2) had a melting point of 242°C and a volumetric flow rate of 21 mm³/sec. A film having a thickness of 0.2 mm obtained from the fluorocopolymer (C-2) had a haze of 5.1%. The granules were melt-kneaded by using an extruder at 260°C for a retention time of 2 minutes to prepare pellets (C-2).

### EXAMPLE 1

Using a two-layer extruder, a double-layer laminate tube comprising an inner layer made of a fluorocopolymer and an outer layer made of EVOH was formed. The pellets (C-1) were supplied to a cylinder for formation of the inner layer, and EVOH (EVAL, manufactured by KURARAY CO., LTD.) was supplied to a cylinder for formation of the outer layer. The cylinder temperatures at the fluorocopolymer (C-1) and EVOH transportation zones were 250°C and 220°C, respectively, and the temperature of the co-die was 260°C. The laminate tube had an inner diameter of 6 mm, and thicknesses of the inner layer and the outer layer of 0.2 mm and 0.8 mm, respectively. The obtained laminate tube had an interlaminar adhesive strength of 35 N/cm and had favorable interlaminar adhesion. Further, the laminate tube had a haze of 10.7% and was excellent in transparency, and a liquid transported in the tube could be visually confirmed sufficiently from the outside.

### EXAMPLE 2

Using a two-layer extruder, a double-layer laminate tube comprising an inner layer made of a fluorocopolymer and an outer layer made of TPU was formed. The pellets (C-2) were supplied to a cylinder for formation of the inner layer, and TPU (Resamine PS, manufactured by Dainichiseika Color & Chemicals Mfg. Co., Ltd.) was supplied to a cylinder for formation of the outer layer. The cylinder temperatures at the fluorocopolymer (C-2) and TPU transportation zones were 250°C and 200°C, respectively, and the temperature of the co-die was 250°C. The laminate tube had an inner diameter of 6 mm, and thicknesses of the inner layer and the outer layer of 0.2 mm and 0.8 mm, respectively. The obtained laminate tube had an interlaminar adhesive strength of 40 N/cm and had favorable interlaminar adhesion. Further, the laminate tube had a haze of 17.8% and was excellent in transparency, and a liquid transported in the tube could be visually confirmed sufficiently from the outside.

### EXAMPLE 3

Using a two-layer extruder, a double-layer laminate tube comprising an inner layer made of a fluorocopolymer and an outer layer made of TPEE was formed. The fluorocopolymer (C-1) was supplied to a cylinder for formation of the inner layer, and TPEE (Pelprene, manufactured by TOYOBO CO., LTD.) was supplied to a cylinder for formation of the outer layer. The cylinder temperatures at the fluorocopolymer (C-1) and TPEE transportation zones were 250°C and 230°C, respectively, and the temperature of the co-die was 260°C. The laminate tube had an inner diameter of 6 mm, and thicknesses of the inner layer and the outer layer of 0.2 mm and 0.8 mm, respectively. The obtained laminate tube had an interlaminar adhesive strength of 37 N/cm and had favorable interlaminar adhesion. Further, the laminate tube had a haze of 11.8% and was excellent in transparency, and a liquid transported in the tube could be visually confirmed sufficiently from the outside.

### INDUSTRIAL APPLICABILITY

The laminate tube of the present invention is suitable as a tube for transportation of a liquid and a gas, in the field of beverage, food, coating composition, chemical solution, chemical test and industry fields.

Specific examples of the liquid and the gas to be transported include beer, drinking water, soft drinks, coffee, tea, oolong tea, milk, syrup, sour milk beverages, soy sauce, food oil, sauce, vinegar, alcoholic beverages, alcohols, organic solvents, coating compositions, acids, alkalis, drip-feed solutions, compressed air, hydrogen gas and argon gas.

## Claims

1. A laminate tube which comprises a layer made of a fluorocopolymer containing repeating units based on at least one fluoromonomer selected from the group consisting of tetrafluoroethylene and chlorotrifluoroethylene and repeating units based on at least one functional monomer selected from the group consisting of an acid anhydride having a polymerizable unsaturated bond and a dicarboxylic acid having a polymerizable unsaturated bond, and a layer made of a non-fluororesin directly laminated, and has a haze of from 0.1 to 30%.

2. The laminate tube according to Claim 1, wherein the fluorocopolymer contains repeating units (a) based on at least one fluoromonomer selected from the group consisting of tetrafluoroethylene and chlorotrifluoroethylene, repeating units (b) based on ethylene and repeating units (c) based on at least one functional monomer selected from the group consisting of itaconic anhydride, itaconic acid, citraconic anhydride and citraconic acid, with a molar ratio (a)/(b) of from 20/80 to 80/20 and a molar ratio (c)/((a)+(b)) of from 1/10,000 to 5/100, and has a volumetric flow rate of from 0.1 to 1,000 mm³/sec.

3. The laminate tube according to Claim 1 or 2, wherein the fluorocopolymer further contains repeating units (d) based on another fluoromonomer (excluding tetrafluoroethylene and chlorotrifluoroethylene) with a content of the repeating units (d) of from 0.1 to 20 mol% based on all the repeating units in the fluorocopolymer.

4. The laminate tube according to Claim 3, wherein the above another fluoromonomer is a compound represented by CH₂=CX(CF₂)ₙY (wherein each of X and Y which are independent of each other, is a hydrogen atom or a fluorine atom, and n=2 to 8).

5. The laminate tube according to Claim 3, wherein the above another fluoromonomer is a compound represented by CH₂=CH(CF₂)ₙF (wherein n=2 to 4).

6. The laminate tube according to Claim 2, wherein the molar ratio (a)/(b) is from 50/50 to 70/30, and the molar ratio (c)/((a)+(b)) is from 3/1,000 to 3/100.

7. The laminate tube according to any one of Claims 1 to 6, which has a haze of from 0.1 to 20%.

8. The laminate tube according to any one of Claims 1 to 7, wherein the non-fluororesin is a thermoplastic elastomer.

9. The laminate tube according to Claim 8, wherein the thermoplastic elastomer is a polyurethane thermoplastic elastomer or a polyester thermoplastic elastomer.

10. The laminate tube according to any one of Claims 1 to 9, which is formed by coextrusion of the fluorocopolymer and the non-fluororesin.
